# EUROPEAN PATENT SPECIFICATION

(11) **EP 4 662 406 B1**
(45) Date of publication and mention of the grant of the patent: **08.07.2026**
(21) Application number: 24708819.8
(22) Date of filing: 06.03.2024
(51) Int. Cl.: F03D 13/20, F03D 13/40, B63B 35/00

(54) **METHOD FOR INSTALLING A WIND TURBINE TOWER**
VERFAHREN ZUR INSTALLATION EINES WINDTURBINENTURMS
PROCÉDÉ D'INSTALLATION D'UNE TOUR D'ÉOLIENNE

(30) Priority: 05.04.2023 EP 23166681
(43) Date of publication of application: 17.12.2025
(73) Proprietor: Siemens Gamesa Renewable Energy A/S, 7330 Brande (DK)
(72) Inventor: BERTELSEN, Frederik Jul, 7100 Vejle (DK); KJELDBJERG, Rene, 7160 Toerring (DK); PANDURO, Jesper, 7184 Vandel (DK)
(74) Representative: SGRE-Association
(86) International application number: PCT/EP2024/055856
(87) International publication number: WO 2024/208522

(56) References cited:
- EP-A1- 3 088 735
- EP-A1- 4 043 721
- US-A1- 2022 228 565

## Description

The present invention relates to a method for installing a wind turbine tower and in particular for seafastening the wind turbine tower for transporting the tower on a vessel to a foundation.

In prior art, it is known to install the tower on a vessel for transporting it to a foundation with screws and nuts. When seafastening the tower on the vessel, there is limited space for handling the screws and bolts because of tower internals and other equipment inside the tower. Further, it is difficult to handle the screws manually because of the size and/or weight of the studs.

Until now, screws like cylinder head screws are used for fastening wind turbine towers via a tower fastening portion to a vessel fastening portion. When installing the tower at the vessel fastening portion, the screws are guided through vessel through holes in the vessel fastening portion with the screw heads on a lower portion of the screws. That is, the screws are pushed from bottom to top in an upward direction through the vessel through holes and the coaxially positioned tower through holes, until the upper part of the screws protrude from the tower through holes in an upward direction and the screw heads contact the outer surfaces of a lower part of the vessel fastening portions around the vessel through holes. Thereafter, a nut is screwed onto each upper portion of the screws protruding from the tower through holes. After the vessel with the tower on it has reached the foundation for the tower, the screws are replaced by new screws, which are inserted into the tower through holes in a downward direction, that is, from top to bottom, after the older screws have been removed.

Since the vessel is moving, for example on water, installation times on the vessel have to be as short as possible in order to prevent unintentional damages to the tower. This is challenging in particular when it comes to replacing the old screws by the new screws for lifting the tower from the vessel to the foundation. A prior art example can be found in EP3088735A1.

It is an object of the present invention to address the above mentioned issues. In particular, it is an object of the present invention to provide an improved method for seafastening a wind turbine tower.

Aforesaid object is achieved by the subject-matters of the claims. In particular, the object is achieved by a method according to claim 1. Further features and details of the invention can be drawn from the dependent claims, the description and the figures.

According to the present invention, a method is provided for installing a wind turbine tower, wherein the tower comprises a tower fastening portion and a tower through hole in the tower fastening portion, comprising the steps of:
providing a vessel with a vessel fastening portion and a vessel through hole in the vessel fastening portion,
landing the tower onto the vessel with the tower through hole at the vessel through hole,
positioning a stud in the tower through hole and the vessel through hole, wherein the stud comprises an upper portion protruding from the tower through hole in an upward direction and a lower portion protruding from the vessel through hole in a downward direction,
fastening the tower fastening portion to the vessel fastening portion by means of a lower fastening element attached to the lower portion and an upper fastening element attached to the upper portion, wherein the lower fastening element and the upper fastening element are both detachable from the stud in a non-destructive way.

Within the scope of the present invention, it has been found that replacing the traditional screw by the stud without the screw head provides the possibility of an improved way of installing the tower onto the vessel. In particular, the tower can be installed in a way that provides an improved starting position for moving the tower from the vessel to the foundation later on.

Having the stud with the lower fastening element being detachable from the stud, that is, having no fixed screw head, it is possible to just remove and/or detach the lower fastening element from the stud for lifting the tower from the vessel. Further, the old and/or initial stud will then be reused for fastening the tower onto the foundation. Hence, the stud can be reused during the installation process of the tower. Even the lower fastening means may be reused, depending on the given circumstances and/or safety requirements. In addition, the inventive method not only simplifies the method known in prior art, but also provides the basis for a faster way of moving and installing the tower from the vessel onto the foundation.

The above described method it not restricted to the order of the above indents. That is, an alternative order of the described method steps is possible. For example, positioning the stud in the vessel through hole may be performed before and/or during landing the tower onto the vessel. Attaching the lower fastening element may be performed before or after positioning the stud in the vessel through hole and/or the tower through hole.

The tower through hole can be understood as at least one tower through hole. The vessel through hole can be understood as at least one vessel through hole. The stud can be understood as at least one stud. That is, it is possible that the tower is fastened to the vessel by means of a plurality of studs in a corresponding plurality of tower through holes and vessel through holes. The described steps may then be performed after one another or in a combined manner. For example, in one alternative, every stud may be inserted into the holes and when every stud is in position, the fastening elements are attached and fastened. According to another alternative, the tower may be fastened onto the vessel by means of one stud in the described manner and by means of at least one further stud in the same manner.

The upper portion may be understood as an upper end portion of the stud. The lower portion may be understood as a lower end portion of the stud. The stud may comprise an external thread in the lower portion, the upper portion and/or over the entire length of the stud. The stud may be provided as a rod- and/or pin-shaped stud.

The tower fastening portion may be understood as a fastening portion, for example a flange portion, in a lower and/or bottom part of the tower. Hence, the tower through hole may be located in a tower flange of the tower fastening portion. In this way, conflicts with tower internals can be prevented when handling the stud or studs. The vessel through hole may be located in a vessel flange of the vessel fastening portion.

The vessel can be understood as a floating and/or ship-like platform for transporting the tower to a foundation at sea. However, the vessel may also be understood as a land-based transportation platform. Landing the tower onto the vessel may be understood as moving and/or lifting the tower onto the vessel. Fastening the tower fastening portion to the vessel fastening portion may be understood as fixing and/or mounting the tower fastening portion to the vessel fastening portion. Fastening the tower fastening portion to the vessel fastening portion by means of the lower fastening element and the upper fastening element may be understood such that the lower fastening element and the upper fastening element may be used, in addition to further fastening tools like the stud and the fastening portions, for fastening the tower to the vessel.

According to a further embodiment of the invention, the stud may be positioned in the vessel through hole such that the lower portion protrudes from the vessel through hole in the downward direction and the lower fastening element may be attached at the lower portion before the tower is landed onto the vessel. In this way, the stud with the attached lower fastening element may be pushed into the tower through hole as soon as the tower fastening portion is in a suitable position at the vessel fastening portion while having a mechanical stop by means of the lower fastening element.

In a further embodiment of the invention it is possible that the stud is moved in the downward direction until the upper portion is located in the vessel through hole before and/or when landing the tower onto the vessel and the stud is moved in the upward direction until the upper portion is moved through the tower through hole and outside the tower through hole after the tower landed onto the vessel. In this way, the stud can be easily held in the desired position until the tower contacts the vessel and can then be quickly pushed into the tower through hole.

Moreover, the inventive method may be performed such that the lower fastening element is attached to the lower portion by screwing the lower fastening element onto the lower portion and the upper fastening element is attached to the upper portion by screwing the upper fastening element onto the upper portion. That is, the upper fastening element and the lower fastening element may each comprise an internal thread, by means of which they may be screwed onto the stud and the external thread, respectively. The lower fastening element and the upper fastening element may both be provided as nuts. In this way, the lower fastening element and the upper fastening element may be easily attached to the stud and detached from the stud. The lower fastening element and the upper fastening element being detachable from the stud in a non-destructive way may thus be understood such that they may be loosened and/or screwed off from the stud.

Furthermore, the stud may be rotated into the lower fastening element by using a mechanical rotation means. By automating the rotation of the stud into the lower fastening means, this process can be performed quicker, more consistent and with higher safety compared to conventional methods. Moreover, it is possible to use heavier studs like studs with a weight over 10 kg or over 15 kg. The mechanical rotation means may be provided as a robot for rotating and/or spinning the stud.

In addition, or alternatively, the lower fastening element may be attached at and/or to the lower portion by using a mounting shelf for holding the lower fastening element and/or for lifting the lower fastening element. In particular, the mounting shelf can be used for lifting the lower fastening element with the stud on the lower fastening element. For example, the lower fastening element may be supported at the mounting shelf, which might be part of a robot and/or machine. Then, the stud may be placed into the vessel through hole and onto the lower fastening element. That is, the stud is then supported by the lower fastening element and the mounting shelf. Thereafter, the stud may be attached to the lower mounting element, for example, may be manually screwed into the lower mounting element, which might be provided as a nut. Using the mounting shelf provides an improved way of attaching the lower fastening element to the stud. In particular, by supporting the stud on the lower fastening element and the mounting shelf, respectively, an easier handling of the stud can be achieved for the process of attaching the lower fastening element to the stud. The mounting shelf might comprise a mechanical, hydraulic and/or pneumatic lifting device for lifting and/or lowering the lower fastening element.

The inventive method may further comprise the following steps for installing the tower on a foundation, in particular on an offshore foundation:
detaching the lower fastening element from the stud,
lifting the tower from the vessel with the stud being at the tower fastening portion having the upper fastening element at the upper portion,
providing a foundation with a foundation fastening portion and a foundation through hole in the foundation fastening portion,
landing the tower onto the foundation with the tower through hole at the foundation through hole, while guiding the lower portion of the stud, still being at the tower fastening portion, through the foundation through hole,
attaching the lower fastening element at the lower portion, fastening the tower fastening portion to the foundation fastening portion by means of the lower fastening element and the upper fastening element.

Having installed the lower fastening element instead of having a conventional screw head, the lower fastening element can be easily detached from the stud in order to lift the tower including the stud or studs and the upper fastening element or elements from the vessel. In this way, the critical time for fastening the tower onto the foundation can be held relatively short. The foundation through hole may be located in a foundation flange of the foundation fastening portion. The foundation may be understood as an offshore foundation but also as a platform, where the tower has to be installed eventually.

According to a further embodiment of the present invention, the tower comprises a plurality of tower through holes, the vessel comprises a plurality of vessel through holes and/or the foundation comprises a plurality of foundation through holes, wherein a plurality of studs is positioned in the tower through holes and the vessel through holes, wherein each stud comprises an upper portion protruding from each tower through hole in an upward direction and a lower portion protruding from each vessel through hole in a downward direction. Further, each stud may be moved in the downward direction until each upper portion is located in each corresponding vessel through hole before and/or when landing the tower onto the vessel and each stud may be moved in the upward direction until each upper portion is moved through each corresponding tower through hole and outside each corresponding tower through hole after the tower landed onto the vessel. That is, no stud may protrude from the holes during landing of the tower. Moreover, the tower may be lifted from the vessel with each stud being at the tower fastening portion having attached the corresponding upper fastening element at each upper portion. In this way, the tower may be installed in an even more secure and still easy and space-saving manner.

Further measures improving the inventive concept can be drawn from the following description of a preferred method, which is schematically shown in the drawings. The features and advantages, which can be drawn from the claims, from the description and from the drawings, might be considered essential alone or in combination with each other.

In the drawings:
Figs. 1 - 16 show a tower, a vessel and a foundation for explaining a preferred way of installing a wind turbine tower according to the present invention, and
Figs. 17 and 18 show a tower, a vessel and a foundation for explaining a way of installing a wind turbine tower according to prior art.

Elements and features having the same function and operating principle are labeled with the same reference signs in the drawings.

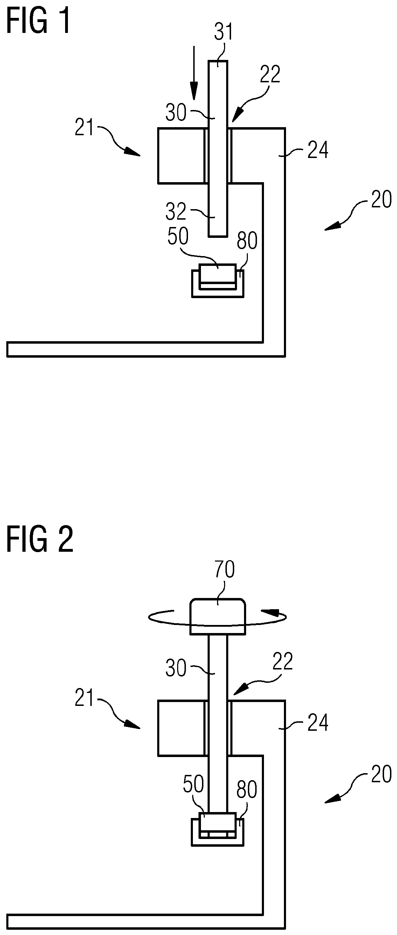

In fig. 1, part of a vessel 20 is shown having a vessel fastening portion 21 and a vessel through hole 22 in the vessel fastening portion 21. The vessel fastening portion 21 comprises a vessel flange 24. Fig. 1 furthers shows a stud 30 in the vessel through hole 22, wherein the stud 30 comprises an upper portion 31 protruding from the tower through hole 12 in an upward direction and a lower portion 32 protruding from the vessel through hole 22 in a downward direction. Moreover, a lower fastening element 50 and a mounting shelf 80 are shown. In a first step of the installation, the stud 30 is moved downward through the vessel through hole 22 into the lower fastening element 50, which is supported at the mounting shelf 80. The stud 30 is provided as a threaded rod and the lower fastening element 50 is provided as a nut.

As shown in fig. 2 the stud 30 is rotated into the lower fastening element 50 by using a mechanical rotation means 70. Depending on the weight of the stud 30, it could alternatively be screwed into the nut manually or the lower fastening element 50 could be screwed onto the stud 30 by holding the stud 30 still and rotating the lower fastening element 50, either manually or by means of the mounting shelf 80.

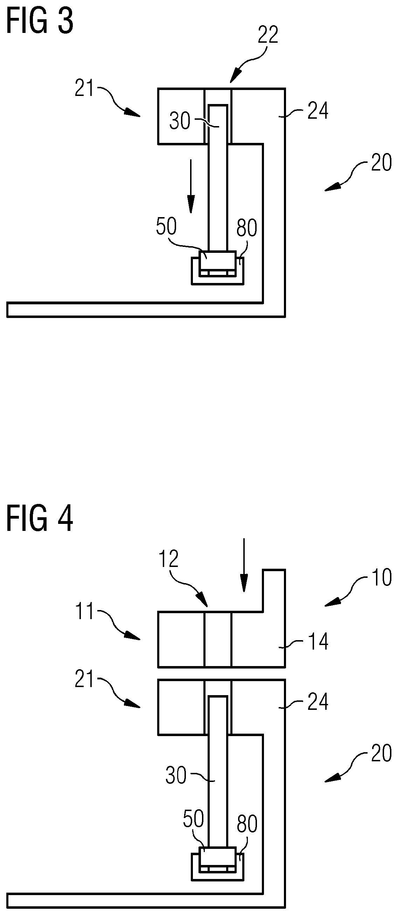

Fig. 3 shows the stud 30 being moved in a downward direction and in fig. 4, a wind turbine tower 10 is landed onto the vessel 20. In particular, the tower fastening portion 11 is landed onto the vessel fastening portion 21. The tower fastening portion 11 comprises a tower through hole 12 and a tower flange 14, in which the tower through hole 12 is located. In the shown example, the stud 30 is positioned in the vessel through hole 22 such that the lower portion 32 protrudes from the vessel through hole 22 in the downward direction and the lower fastening element 50 is attached at the lower portion 32 before the tower 10 is landed onto the vessel 20. As can be seen in fig. 3 and fig. 4, the stud 30 is moved in the downward direction until the upper portion 31 is located in the vessel through hole 22 before landing the tower 10 onto the vessel 20.

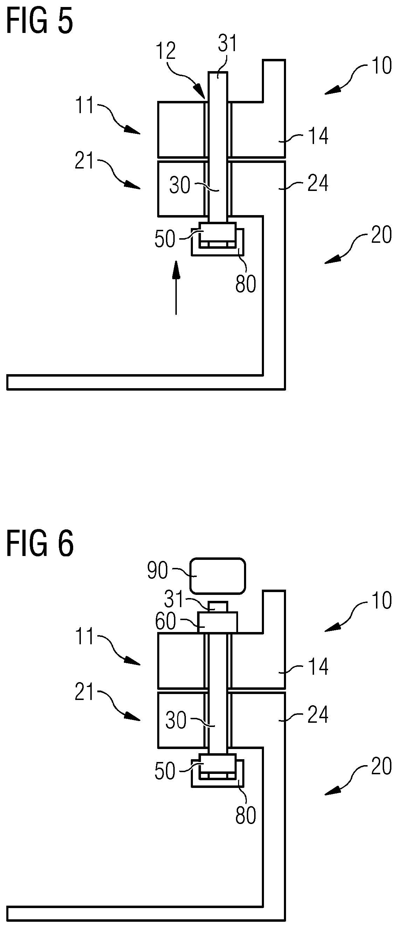

As shown in fig. 5, the stud 30 is moved in the upward direction until the upper portion 31 is moved through the tower through hole 12 and outside the tower through hole 12 after the tower 10 is landed in the desired position onto the vessel 20. That is, after the stud 30 is located in the tower through hole 12 and the vessel through hole 22, the upper portion 31 protrudes from the tower through hole 12 in the upward direction and the lower portion 32 protrudes from the vessel through hole 22 in the downward direction.

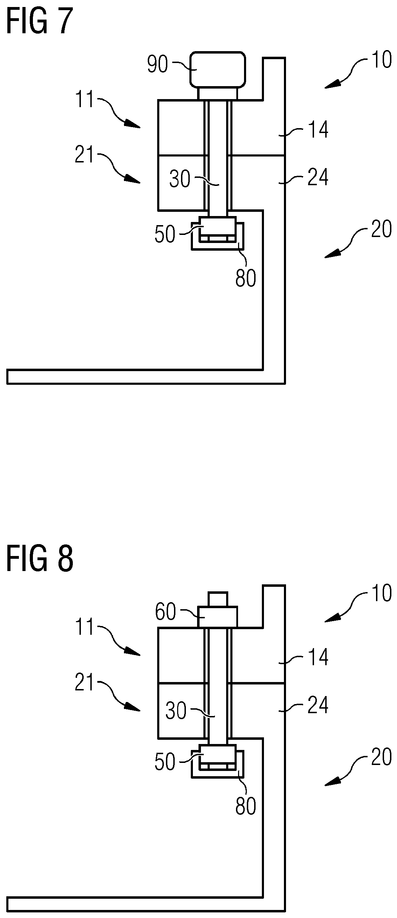

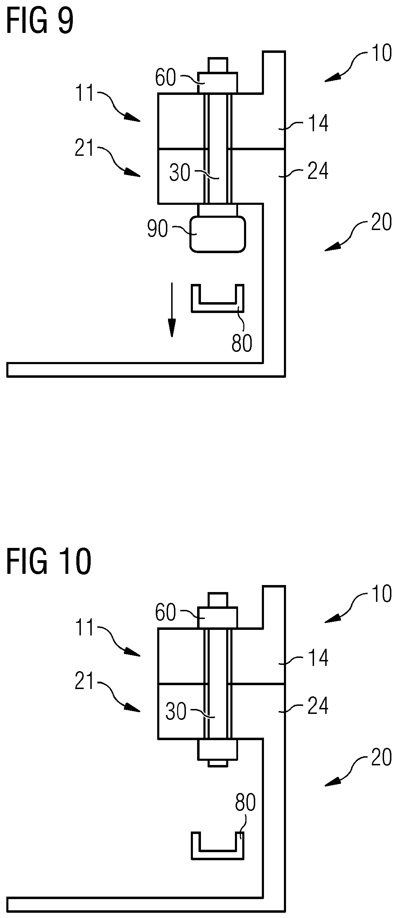

Thereafter, as shown in fig. 6, an upper fastening element 60 is attached to the upper portion 31 of the stud 30. The upper fastening 60 is provided as a nut, which is screwed onto the stud 30. Afterwards, a tensioning tool 90 is used to fasten the tower fastening portion 11 to the vessel fastening portion 21 by screwing the upper fastening element 60 further onto the stud 30. Fig. 8 shows a further stud 30 being located in a further tower through hole 12 and a further vessel through hole 22 for fastening the tower 10 in a more secure way to the vessel 20 by means of further fastening elements 50, 60. The fastening in fig. 7 can be considered as a so called survival mode and the additional fastening shown in fig. 8 can be considered as a so called transit mode. As a further measure of safety, as shown in fig. 9, the tensioning tool 90 is used to further fastening the lower fastening element 50 as well. Fig. 10 shows a sea transit of the tower 10 on the vessel 20, during which the mounting shelf is moved and/or shifted into a lower position.

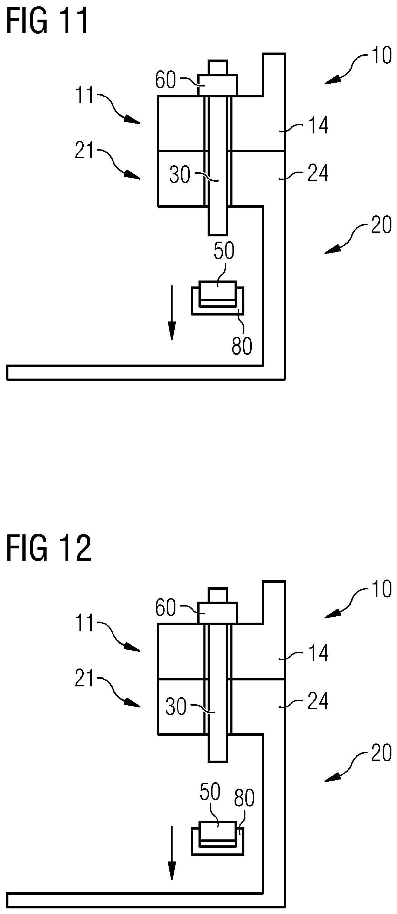

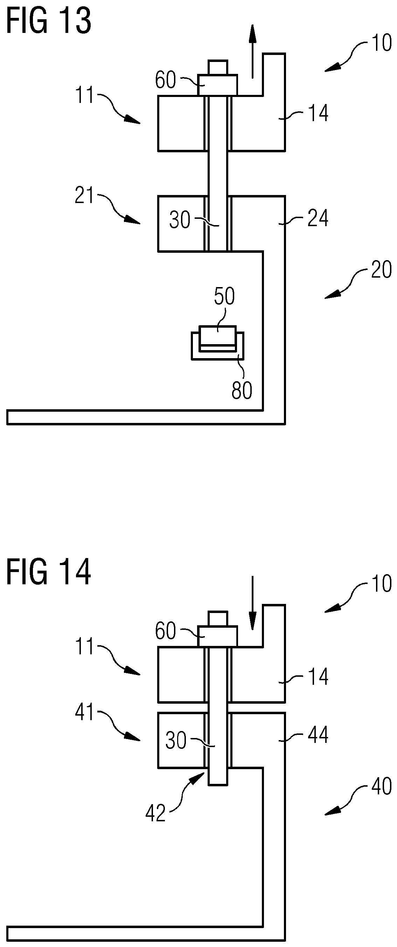

Fig. 11 shows the state, in which the vessel 20 arrived at a foundation 40 (shown in fig. 14) and the lower fastening element 50 is removed from the lower portion 32 of the first stud 30 by means of the mounting shelf in transit mode. Fig. 12 shows the step of removing the further lower fastening element 50 from the further stud 30 in survival mode.

As can be seen in fig. 13, the tower 10 will be lifted as soon as every lower fastening element 50 has been removed from every stud 30, wherein the tower 10 is lifted from the vessel 20 with the studs 30 being at the tower fastening portion 11. As shown in fig. 13, the upper fastening elements 60 will remain at the studs 30 and the upper portions 31, respectively, when lifting the tower 10 from the vessel 20.

After the tower 10 was lifted from the vessel 20, it will be landed onto the foundation 40. The foundation 40 of the described example comprises a foundation fastening portion 41 and a foundation through hole 42 in the foundation fastening portion 41. In particular, the foundation through hole 42 is located in a foundation flange 44 of the foundation fastening portion 41. As shown in fig. 14, the tower 10 is landed onto the foundation 40 with the tower through hole 12 at the foundation through hole 42, while guiding the lower portion 32 of the stud 30, still being at the tower fastening portion 11, through the foundation through hole 42.

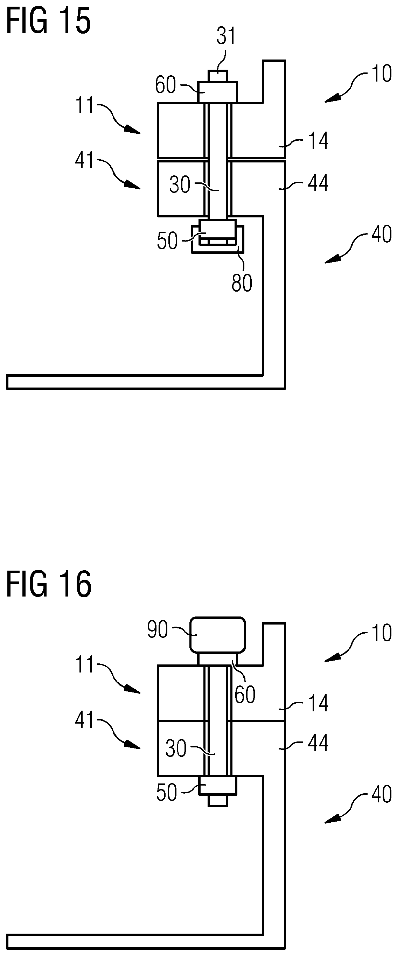

After the tower 10 landed onto the foundation 40, as shown in fig. 15, the lower fastening element 50 is attached at the lower portion 32. In particular, the nut shaped lower fastening element 50 is screwed onto the lower portion 32 of the stud 30 by means of the mounting shelf 80. Finally, the tower fastening portion 11 is fastened to the foundation fastening portion 41 by means of the lower fastening element 50 and the upper fastening element 60. As shown in fig. 16, in order to secure the tower 10 onto the foundation 40, the upper fastening element 60 is tensioned by the tensioning tool 90.

The aforesaid description of the accompanying drawings is only by the way of detail and example. Specific features of each aspect of the present invention and the figures can be combined which each other if of technical sense.

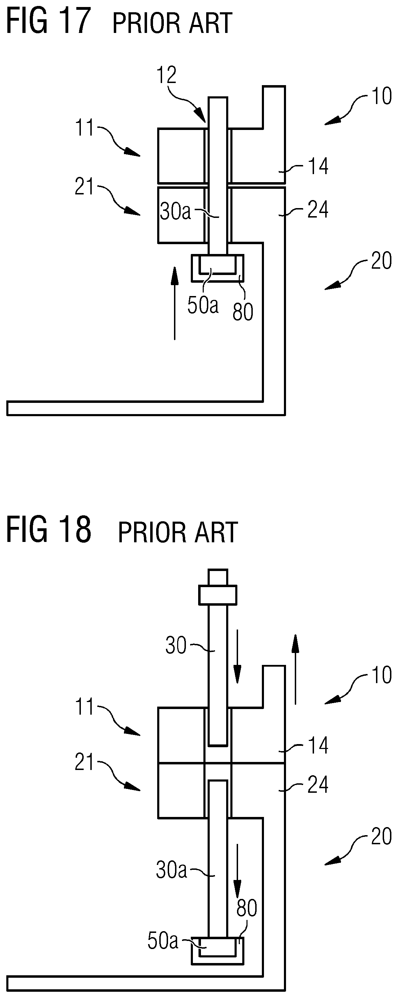

Fig. 17 and fig. 18 show parts of a tower 10 and a vessel 20 according to prior art, in order to describe major differences between the conventional and the inventive way of installing the tower 10 on the vessel 20. As can be seen in fig. 17, the screw 30a used for fastening the tower 10 onto the vessel 20 has a firm screw head 50a. When moving the tower 10 from the vessel 20 onto the foundation 40 afterwards, as shown in fig. 18, the screw 30a has to be replaced by a further screw 30a. This way of processing is described in more detail in the introductory part of the description above.

## Claims

1. A method for installing a wind turbine tower (10), wherein the tower (10) comprises a tower fastening portion (11) and a tower through hole (12) in the tower fastening portion (11), comprising:
- providing a vessel (20) with a vessel fastening portion (21) and a vessel through hole (22) in the vessel fastening portion (21),
- landing the tower (10) onto the vessel (20) with the tower through hole (12) at the vessel through hole (31),
- positioning a stud (30) in the tower through hole (12) and the vessel through hole (22), wherein the stud (30) comprises an upper portion (31) protruding from the tower through hole (12) in an upward direction and a lower portion (32) protruding from the vessel through hole (22) in a downward direction,
- fastening the tower fastening portion (11) to the vessel fastening portion (21) by means of a lower fastening element (50) attached to the lower portion (32) and an upper fastening element (60) attached to the upper portion (31), wherein the lower fastening element (50) and the upper fastening element (60) are both detachable from the stud (30) in a non-destructive way.

2. The method according to claim 1, wherein the stud (30) is positioned in the vessel through hole (22) such that the lower portion (32) protrudes from the vessel through hole (22) in the downward direction and the lower fastening element (50) is attached at the lower portion (32) before the tower (10) is landed onto the vessel (20).

3. The method according to claim 2, wherein the stud (30) is moved in the downward direction until the upper portion (31) is located in the vessel through hole (22) before and/or when landing the tower (10) onto the vessel (20) and the stud (30) is moved in the upward direction until the upper portion (31) is moved through the tower through hole (12) and outside the tower through hole (12) after the tower (10) landed onto the vessel (20).

4. The method according to any one of the preceding claims, wherein the lower fastening element (50) is attached to the lower portion (32) by screwing the lower fastening element (50) onto the lower portion (32) and the upper fastening element (60) is attached to the upper portion (31) by screwing the upper fastening element (60) onto the upper portion (31).

5. The method according to one of the preceding claims, wherein the stud (30) is rotated into the lower fastening element (50) by using a mechanical rotation means (70).

6. The method according to one of the preceding claims, wherein the lower fastening element (50) is attached at the lower portion (32) by using a mounting shelf (80) for holding the lower fastening element (50) and/or for lifting the lower fastening element (50).

7. A method according to one of the preceding claims, further comprising:
- detaching the lower fastening element (50) from the stud (30),
- lifting the tower (10) from the vessel (20) with the stud (30) being at the tower fastening portion (11) having the upper fastening element (60) at the upper portion (31),
- providing a foundation (40) with a foundation fastening portion (41) and a foundation through hole (42) in the foundation fastening portion (41),
- landing the tower (10) onto the foundation (40) with the tower through hole (12) at the foundation through hole (42), while guiding the lower portion (32) of the stud (30), still being at the tower fastening portion (11), through the foundation through hole (42),
- attaching the lower fastening element (50) at the lower portion (32),
- fastening the tower fastening portion (11) to the foundation fastening portion (41) by means of the lower fastening element (50) and the upper fastening element (60).

8. The method according to one of the preceding claims, wherein the tower (10) comprises a plurality of tower through holes (12) and/or the vessel (20) comprises a plurality of vessel through holes (22), wherein a plurality of studs (30) is positioned in the tower through holes (12) and the vessel through holes (22), wherein each stud (30) comprises an upper portion (31) protruding from each tower through hole (12) in an upward direction and a lower portion (32) protruding from each vessel through hole (22) in a downward direction.

9. The method according to one of the preceding claims, wherein the tower (10) comprises a plurality of tower through holes (12) and/or the vessel (20) comprises a plurality of vessel through holes (22), wherein a plurality of studs (30) is positioned in the tower through holes (12) and the vessel through holes (22), wherein each stud (30) is moved in the downward direction until each upper portion (31) is located in each corresponding vessel through hole (22) before and/or when landing the tower (10) onto the vessel (20) and each stud (30) is moved in the upward direction until each upper portion (31) is moved through each corresponding tower through hole (12) and outside each corresponding tower through hole (12) after the tower (10) landed onto the vessel (20).

10. The method according to one of the preceding claims, wherein the tower (10) comprises a plurality of tower through holes (12) and/or the vessel (20) comprises a plurality of vessel through holes (22), wherein a plurality of studs (30) is positioned in the tower through holes (12) and the vessel through holes (22), wherein the tower is lifted from the vessel (20) with each stud (30) being at the tower fastening portion (11) having attached the corresponding upper fastening element (60) at each upper portion (31).

## Patentansprüche

1. Verfahren zum Installieren eines Windturbinenturms (10), wobei der Turm (10) einen Turmbefestigungsabschnitt (11) und ein Turmdurchgangsloch (12) in dem Turmbefestigungsabschnitt (11) umfasst, umfassend:
- Bereitstellen eines Schiffes (20) mit einem Schiffsbefestigungsabschnitt (21) und einem Schiffsdurchgangsloch (22) in dem Schiffsbefestigungsabschnitt (21),
- Landen des Turmes (10) auf das Schiff (20) mit dem Turmdurchgangsloch (12) an dem Schiffsdurchgangsloch (31),
- Positionieren eines Bolzens (30) in dem Turmdurchgangsloch (12) und dem Schiffsdurchgangsloch (22), wobei der Bolzen (30) einen oberen Abschnitt (31), der aus dem Turmdurchgangsloch (12) in einer Aufwärtsrichtung vorspringt, und einen unteren Abschnitt (32), der aus dem Schiffsdurchgangsloch (22) in einer Abwärtsrichtung vorspringt, umfasst,
- Befestigen des Turmbefestigungsabschnitts (11) an dem Schiffsbefestigungsabschnitt (21) mittels eines unteren Befestigungselements (50), das an dem unteren Abschnitt (32) angebracht ist, und eines oberen Befestigungselements (60), das an dem oberen Abschnitt (31) angebracht ist, wobei das untere Befestigungselement (50) und das obere Befestigungselement (60) beide in einer zerstörungsfreien Weise von dem Bolzen (30) lösbar sind.

2. Verfahren nach Anspruch 1, wobei der Bolzen (30) derart in dem Schiffsdurchgangsloch (22) positioniert wird, dass der untere Abschnitt (32) in der Abwärtsrichtung aus dem Schiffsdurchgangsloch (22) vorspringt, und das untere Befestigungselement (50) an dem unteren Abschnitt (32) angebracht wird, bevor der Turm (10) auf das Schiff (20) gelandet wird.

3. Verfahren nach Anspruch 2, wobei der Bolzen (30) vor und/oder bei dem Landen des Turmes (10) auf das Schiff (20) in die Abwärtsrichtung bewegt wird, bis sich der obere Abschnitt (31) in dem Schiffsdurchgangsloch (22) befindet, und der Bolzen (30), nachdem der Turm (10) auf das Schiff (20) gelandet ist, in die Aufwärtsrichtung bewegt wird, bis der obere Abschnitt (31) durch das Turmdurchgangsloch (12) und außerhalb des Turmdurchgangslochs (12) bewegt wird.

4. Verfahren nach einem der vorhergehenden Ansprüche, wobei das untere Befestigungselement (50) durch Schrauben des unteren Befestigungselements (50) auf den unteren Abschnitt (32) an dem unteren Abschnitt (32) angebracht wird und das obere Befestigungselement (60) durch Schrauben des oberen Befestigungselements (60) auf den oberen Abschnitt (31) an dem oberen Abschnitt (31) angebracht wird.

5. Verfahren nach einem der vorhergehenden Ansprüche, wobei der Bolzen (30) unter Verwendung eines mechanischen Drehmittels (70) in das untere Befestigungselement (50) gedreht wird.

6. Verfahren nach einem der vorhergehenden Ansprüche, wobei das untere Befestigungselement (50) an dem unteren Abschnitt (32) unter Verwendung einer Montageablage (80) zum Halten des unteren Befestigungselements (50) und/oder zum Anheben des unteren Befestigungselements (50) angebracht wird.

7. Verfahren nach einem der vorhergehenden Ansprüche, ferner umfassend:
- Lösen des unteren Befestigungselements (50) von dem Bolzen (30),
- Anheben des Turmes (10) von dem Schiff (20), wobei sich der Bolzen (30) an dem Turmbefestigungsabschnitt (11) befindet, der das obere Befestigungselement (60) an dem oberen Abschnitt (31) aufweist,
- Bereitstellen eines Fundaments (40) mit einem Fundamentbefestigungsabschnitt (41) und einem Fundamentdurchgangsloch (42) in dem Fundamentbefestigungsabschnitt (41),
- Landen des Turmes (10) auf das Fundament (40) mit dem Turmdurchgangsloch (12) an dem Fundamentdurchgangsloch (42) bei Führen des unteren Abschnitts (32) des Bolzens (30), der sich weiterhin an dem Turmbefestigungsabschnitt (11) befindet, durch das Fundamentdurchgangsloch (42) hindurch,
- Anbringen des unteren Befestigungselements (50) an dem unteren Abschnitt (32),
- Befestigen des Turmbefestigungsabschnitts (11) an dem Fundamentbefestigungsabschnitt (41) mittels des unteren Befestigungselements (50) und des oberen Befestigungselements (60).

8. Verfahren nach einem der vorhergehenden Ansprüche, wobei der Turm (10) eine Vielzahl von Turmdurchgangslöchern (12) umfasst und/oder das Schiff (20) eine Vielzahl von Schiffsdurchgangslöchern (22) umfasst, wobei eine Vielzahl von Bolzen (30) in den Turmdurchgangslöchern (12) und den Schiffsdurchgangslöchern (22) positioniert wird, wobei jeder Bolzen (30) einen oberen Abschnitt (31), der aus jedem Turmdurchgangsloch (12) in einer Aufwärtsrichtung vorspringt, und einen unteren Abschnitt (32), der aus jedem Schiffsdurchgangsloch (22) in einer Abwärtsrichtung vorspringt, umfasst.

9. Verfahren nach einem der vorhergehenden Ansprüche, wobei der Turm (10) eine Vielzahl von Turmdurchgangslöchern (12) umfasst und/oder das Schiff (20) eine Vielzahl von Schiffsdurchgangslöchern (22) umfasst, wobei eine Vielzahl von Bolzen (30) in den Turmdurchgangslöchern (12) und den Schiffsdurchgangslöchern (22) positioniert wird, wobei jeder Bolzen (30) vor und/oder bei dem Landen des Turmes (10) auf das Schiff (20) in die Abwärtsrichtung bewegt wird, bis sich jeder obere Abschnitt (31) in jedem entsprechenden Schiffsdurchgangsloch (22) befindet, und jeder Bolzen (30), nachdem der Turm (10) auf das Schiff (20) gelandet ist, in die Aufwärtsrichtung bewegt wird, bis jeder obere Abschnitt (31) durch jedes entsprechende Turmdurchgangsloch (12) und außerhalb jedes entsprechenden Turmdurchgangslochs (12) bewegt wird.

10. Verfahren nach einem der vorhergehenden Ansprüche, wobei der Turm (10) eine Vielzahl von Turmdurchgangslöchern (12) umfasst und/oder das Schiff (20) eine Vielzahl von Schiffsdurchgangslöchern (22) umfasst, wobei eine Vielzahl von Bolzen (30) in den Turmdurchgangslöchern (12) und den Schiffsdurchgangslöchern (22) positioniert wird, wobei der Turm von dem Schiff (20) angehoben wird, wobei sich jeder Bolzen (30) an dem Turmbefestigungsabschnitt (11) befindet, an dem das entsprechende obere Befestigungselement (60) an jedem oberen Abschnitt (31) angebracht ist.

## Revendications

1. Procédé d'installation d'une tour d'éolienne (10), dans lequel la tour (10) comprend une partie de fixation de tour (11) et un trou traversant de tour (12) dans la partie de fixation de tour (11), comprenant :
- la fourniture d'un navire (20) présentant une partie de fixation de navire (21) et un trou traversant de navire (22) dans la partie de fixation de navire (21),
- le débarquement de la tour (10) sur le navire (20) avec le trou traversant de tour (12) au niveau du trou traversant de navire (31),
- le positionnement d'un goujon (30) dans le trou traversant de tour (12) et le trou traversant de navire (22), dans lequel le goujon (30) comprend une partie supérieure (31) faisant saillie depuis le trou traversant de tour (12) dans une direction vers le haut et une partie inférieure (32) faisant saillie depuis le trou traversant de navire (22) dans une direction vers le bas,
- la fixation de la partie de fixation de tour (11) à la partie de fixation de navire (21) au moyen d'un élément de fixation inférieur (50) fixé à la partie inférieure (32) et d'un élément de fixation supérieur (60) fixé à la partie supérieure (31), dans lequel l'élément de fixation inférieur (50) et l'élément de fixation supérieur (60) sont tous deux amovibles du goujon (30) d'une manière non destructive.

2. Procédé selon la revendication 1, dans lequel le goujon (30) est positionné dans le trou traversant de navire (22) de telle sorte que la partie inférieure (32) fasse saillie depuis le trou traversant de navire (22) dans la direction vers le bas et que l'élément de fixation inférieur (50) soit fixé au niveau de la partie inférieure (32) avant le débarquement de la tour (10) sur le navire (20).

3. Procédé selon la revendication 2, dans lequel le goujon (30) est déplacé dans la direction vers le bas jusqu'à ce que la partie supérieure (31) soit située dans le trou traversant de navire (22) avant et/ou lors du débarquement de la tour (10) sur le navire (20), et le goujon (30) est déplacé dans la direction vers le haut jusqu'à ce que la partie supérieure (31) soit déplacée à travers le trou traversant de tour (12) et à l'extérieur du trou traversant de tour (12) après le débarquement de la tour (10) sur le navire (20).

4. Procédé selon l'une quelconque des revendications précédentes, dans lequel l'élément de fixation inférieur (50) est fixé à la partie inférieure (32) par vissage de l'élément de fixation inférieur (50) sur la partie inférieure (32) et l'élément de fixation supérieur (60) est fixé à la partie supérieure (31) par vissage de l'élément de fixation supérieur (60) sur la partie supérieure (31).

5. Procédé selon l'une des revendications précédentes, dans lequel le goujon (30) est mis en rotation dans l'élément de fixation inférieur (50) par l'utilisation d'un moyen de rotation mécanique (70).

6. Procédé selon l'une des revendications précédentes, dans lequel l'élément de fixation inférieur (50) est fixé au niveau de la partie inférieure (32) par l'utilisation d'un support de montage (80) pour maintenir l'élément de fixation inférieur (50) et/ou pour lever l'élément de fixation inférieur (50).

7. Procédé selon l'une des revendications précédentes, comprenant en outre :
- le détachement de l'élément de fixation inférieur (50) du goujon (30),
- le levage de la tour (10) depuis le navire (20), le goujon (30) se trouvant au niveau de la partie de fixation de tour (11) avec l'élément de fixation supérieur (60) au niveau de la partie supérieure (31),
- la fourniture d'une fondation (40) présentant une partie de fixation de fondation (41) et un trou traversant de fondation (42) dans la partie de fixation de fondation (41),
- le débarquement de la tour (10) sur la fondation (40) avec le trou traversant de tour (12) au niveau du trou traversant de fondation (42), tout en guidant la partie inférieure (32) du goujon (30), se trouvant toujours au niveau de la partie de fixation de tour (11), à travers le trou traversant de fondation (42),
- la fixation de l'élément de fixation inférieur (50) au niveau de la partie inférieure (32),
- la fixation de la partie de fixation de tour (11) à la partie de fixation de fondation (41) au moyen de l'élément de fixation inférieur (50) et de l'élément de fixation supérieur (60).

8. Procédé selon l'une des revendications précédentes, dans lequel la tour (10) comprend une pluralité de trous traversants de tour (12) et/ou le navire (20) comprend une pluralité de trous traversants de navire (22), dans lequel une pluralité de goujons (30) est positionnée dans les trous traversants de tour (12) et les trous traversants de navire (22), dans lequel chaque goujon (30) comprend une partie supérieure (31) faisant saillie depuis chaque trou traversant de tour (12) dans une direction vers le haut et une partie inférieure (32) faisant saillie depuis chaque trou traversant de navire (22) dans une direction vers le bas.

9. Procédé selon l'une des revendications précédentes, dans lequel la tour (10) comprend une pluralité de trous traversants de tour (12) et/ou le navire (20) comprend une pluralité de trous traversants de navire (22), dans lequel une pluralité de goujons (30) est positionnée dans les trous traversants de tour (12) et les trous traversants de navire (22), dans lequel chaque goujon (30) est déplacé dans la direction vers le bas jusqu'à ce que chaque partie supérieure (31) soit située dans chaque trou traversant de navire (22) correspondant avant et/ou lors du débarquement de la tour (10) sur le navire (20), et chaque goujon (30) est déplacé dans la direction vers le haut jusqu'à ce que chaque partie supérieure (31) soit déplacée à travers chaque trou traversant de tour (12) correspondant et à l'extérieur de chaque trou traversant de tour (12) correspondant après le débarquement de la tour (10) sur le navire (20).

10. Procédé selon l'une des revendications précédentes, dans lequel la tour (10) comprend une pluralité de trous traversants de tour (12) et/ou le navire (20) comprend une pluralité de trous traversants de navire (22), dans lequel une pluralité de goujons (30) est positionnée dans les trous traversants de tour (12) et les trous traversants de navire (22), dans lequel la tour est levée depuis le navire (20) avec chaque goujon (30) se trouvant au niveau de la partie de fixation de tour (11) ayant fixé l'élément de fixation supérieur (60) correspondant au niveau de chaque partie supérieure (31).
